(19) Europäisches Patentamt
European Patent Office
Office européen des brevets

(11) Veröffentlichungsnummer: **0 101 665**
**A2**

(12) **EUROPÄISCHE PATENTANMELDUNG**

(21) Anmeldenummer: **83810359.6**

(22) Anmeldetag: **15.08.83**

(51) Int. Cl.[3]: **C 09 B 62/04,** D 06 P 3/66

(30) Priorität: **19.08.82 CH 4960/82**

(43) Veröffentlichungstag der Anmeldung: **29.02.84 Patentblatt 84/9**

(84) Benannte Vertragsstaaten: **CH DE FR GB IT LI**

(71) Anmelder: **CIBA-GEIGY AG, Patentabteilung Postfach, CH-4002 Basel (CH)**

(72) Erfinder: **Seitz, Karl, Dr., Schützenweg 9, CH-4104 Oberwil (CH)**

(54) **Reaktivfarbstoffe der Dioxazinreihe, deren Herstellung und Verwendung.**

(57) Reaktivfarbstoffe der Formel

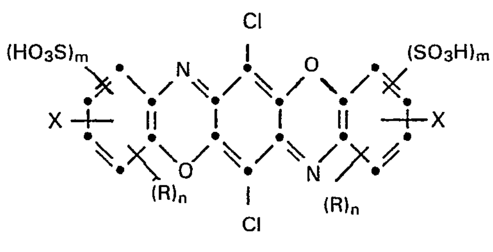

(1)

worin $(R)_n$ für n Substituenten R steht, die unabhängig voneinander $C_{1-4}$-Alkyl, $C_{1-4}$-Alkoxy, Carboxy oder Halogen sein können, n = 0 bis 3, m = 1 bis 2, und X ein Rest der Formel

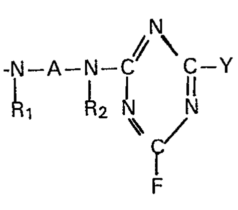

(2)

worin $R_1$ und $R_2$ unabhängig voneinander Wasserstoff oder gegebenenfalls substituiertes $C_{1-4}$-Alkyl, A $C_{3-7}$-Alkylen, das durch Halogen, Hydroxy, Carboxy, Sulfo, Phenyl, Sulfophenyl oder $C_{1-4}$-Alkoxycarbonyl substituiert sein kann, oder Cyclohexylen, das durch $C_{1-4}$-Alkyl substituiert sein kann, oder worin die Gruppe $-N(R_1)-A-N(R_2)-$ 1,4-Piperazindiyl ist, und Y Fluor, $-NH_2$ oder eine substituierte Aminogruppe ist, eignen sich zum Färben und Bedrucken von cellulosehaltigen Fasermaterialien und ergeben nass- und lichtechte Färbungen in leuchtend blauen Tönen.

EP 0 101 665 A2

CIBA-GEIGY AG

Basel (Schweiz) 1-14056/=

Reaktivfarbstoffe der Dioxazinreihe, deren Herstellung und Verwendung.

Die vorliegende Anmeldung betrifft neue verbesserte reaktive Dioxazinfarbstoffe, die sich besonders für das Färben von cellulosehaltigen Fasermaterialien nach dem Ausziehfärbeverfahren eignen, und die nass- und lichtechte Färbungen in reinen, leuchtend blauen Tönen ergeben, sowie Verfahren zur Herstellung dieser Farbstoffe, und deren Verwendung zum Färben und Bedrucken von textilen Materialien.

Gegenstand der Erfindung sind Reaktivfarbstoffe der Formel

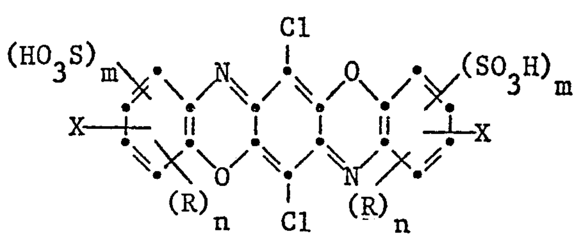

(1),

worin $(R)_n$ für n Substituenten R steht, die unabhängig voneinander $C_{1-4}$-Alkyl, $C_{1-4}$-Alkoxy, Carboxy oder Halogen sein können, n = 0 bis 3, m = 1 bis 2 und X ein Rest der Formel

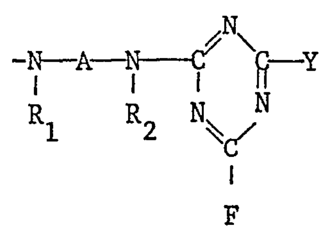

(2),

worin $R_1$ und $R_2$ unabhängig voneinander Wasserstoff oder gegebenenfalls substituiertes $C_{1-4}$-Alkyl, A $C_{3-7}$-Alkylen, das durch Halogen, Hydroxy, Carboxy, Sulfo, Phenyl, Sulfophenyl oder $C_{1-4}$-Alkoxycarbonyl substituiert sein kann, oder Cyclohexylen, das durch $C_{1-4}$-Alkyl substituiert sein kann, oder worin die Gruppe $-N(R_1)-A-N(R_2)-$ 1,4-Piperazindiyl ist, und Y Fluor, $-NH_2$ oder eine substituierte Aminogruppe ist.

Mögliche Substituenten R sind z.B. Methyl, Aethyl, Propyl, Isopropyl, Butyl, Isobutyl, sec.-Butyl, tert.-Butyl, Methoxy, Aethoxy, Propyloxy, Isopropyloxy, Butyloxy, Isobutyloxy, sec.-Butyloxy, tert.-Butyloxy, Fluor, Chlor oder Brom.

Als $C_{1-4}$-Alkyl kommt für $R_1$ und $R_2$ in Formel (2) ein geradkettiger oder verzweigter Alkylrest in Betracht, der auch substituiert sein kann, z.B. durch Halogen, Hydroxy, Cyan, Sulfo oder Sulfato. Als Beispiele für R seien genannt: Methyl, Aethyl, Propyl, Isopropyl, Butyl, Isobutyl, sek. -Butyl, tert.-Butyl, β-Chloräthyl, β-Hydroxyäthyl, β-Hydroxybutyl, β-Cyanäthyl, Sulfomethyl, β-Sulfoäthyl und β-Sulfatoäthyl.

Das Brückenglied A kann geradkettig oder verzweigt sein, und, wie oben angegeben, weitersubstituiert sein. Als Beispiele für A seien genannt:

1,2- und 1,3-Propylen, 2-Hydroxy-1,3-propylen, 1- und 2-Phenyl-1,3-propylen, 2-(4'-Sulfophenyl)-1,3-propylen, 1,4-, 2,3- und 2,4-Butylen, 2-Methyl-1,3-propylen, 2-Methyl-2,4-pentylen, 2,2-Dimethyl-1,3-propylen, 1-Chloro-2,3-propylen, 1,6- und 2,5-Hexylen, 2,3-Diphenyl-1,4-butylen, 1-(Methoxycarbonyl)-1,5-pentylen, 1-Carboxy-1,5-pentylen, 2,7-Heptylen, 3-Methyl-1,6-hexylen, 1,3-Cyclohexylen, 1,4-Cyclohexylen, 4-Methyl-1,3-cyclohexylen, 2-Methyl-1,3-cyclohexylen, 5,5-Dimethyl-1,3-cyclohexylen, 2-Methyl-1,4-cyclohexylen, 4-6-Dimethyl-1,3-cyclohexylen und 4-Methyl-1,2-cyclohexylen.

Als substituierte Aminogruppen Y kommen in Betracht: Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält.

Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechs-gliedrigen N-heterocyclischen Verbindungen in Betracht, die als weitere Heteroatome Stickstoff, Sauerstoff und Schwefel enthalten können.

Die oben genannten Alkyl-, Cycloalkyl-, Aralkyl- und Arylreste, die heterocyclischen Reste sowie die N-heterocyclischen Ringe können weitersubstituiert sein, z.B. durch: Halogen, wie Fluor, Chlor und Brom, Nitro, Cyan, Trifluormethyl, Sulfamoyl, Carbamoyl, $C_{1-4}$-Alkyl, $C_{1-4}$-Alkoxy, Acylaminogruppen, wie Acetylamino, Ureido, Hydroxy, Carboxy, Sulfomethyl und Sulfo.

Als Beispiele für den Aminorest Y in Formel (2) seien genannt: $-NH_2$, Methylamino, Aethylamino, Propylamino, Isopropylamino, Butylamino, Hexylamino, β-Methoxyäthylamino, γ-Methoxypropylamino, β-Aethoxyäthylamino, N,N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino, Benzylamino, Phenäthylamino, Cyclohexylamino, N-Methyl-N-phenylamino, N-Aethyl-N-phenylamino, N-Propyl-N-phenylamino, N-Butyl-N-phenylamino, N-β-Cyanäthyl-N-phenylamino, N-Aethyl-2-methylphenylamino, N-Aethyl-4-methylphenylamino, N-Aethyl-3-sulfophenylamino, N-Aethyl-4-sulfophenylamino, Phenylamino, Toluidino, Xylidino, Chloranilino, Anisidino, Phenetidino, 2-, 3- und 4-Sulfoanilino, 2,5-Disulfoanilino, Sulfomethylanilino, N-Sulfomethylanilino, 3- und 4-Carboxyphenylamino, 2-Carboxy-5-sulfophenylamino, 2-Carboxy-4-sulfophenylamino, 4-Sulfonaphthyl-(1)-amino, 3,6-Disulfo-

naphthyl-(1)-amino, 3,6,8-Trisulfonaphthyl-(1)-amino, 4,6,8-Trisulfonaphthyl-(1)-amino, 6-Sulfonaphthyl-(2)-amino, Pyridyl-(2)-amino, Morpholino, Piperidino und Piperazino.

Unter den Reaktivfarbstoffen der Formel (1) sind diejenigen bevorzugt,

a) worin n = 0 ist;

b) worin m = 1 ist;

c) welche der Formel

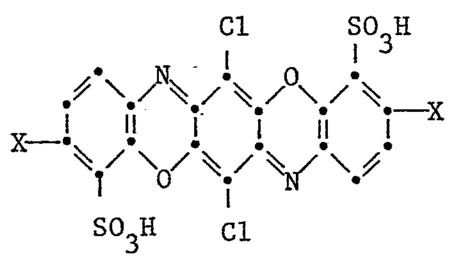

(3)

entsprechen, worin X die unter Formel 1 angegebene Bedeutung hat;

d) worin $R_1$ und $R_2$ Wasserstoff sind;

e) worin A Propylen ist, das durch Chlor, Hydroxy, Methyl oder Phenyl substituiert sein kann;

f) worin A 1,2-Propylen, 1,3-Propylen, 2-Hydroxy-1,3-propylen, 1-Phenyl-1,3-propylen, 2-Phenyl-1,3-propylen, 2-(4'-Sulfophenyl)-1,3-propylen, 2-Methyl-1,3-propylen oder 2,2-Dimethyl-1,3-propylen ist;

g) worin A 1,2-Propylen, 1,3-Propylen, 2-Methyl-1,3-propylen oder 2,2-Dimethyl-1,3-propylen ist;

h) worin A 1,3-Propylen ist;

i) worin Y $-NH_2$, $C_{1-4}$-Alkylamino, das durch Hydroxy oder Sulfo substituiert sein kann, N,N-Di-$C_{1-4}$-alkylamino, das durch Hydroxy substituiert sein kann, Phenylamino, das durch $C_{1-4}$-Alkyl, $C_{1-4}$-Alkoxy, Halogen, Hydroxy, Ureido, Acetylamino, Carboxy, Sulfo oder Sulfomethyl substituiert sein kann, N-$C_{1-4}$-Alkyl-N-phenylamino, Sulfonaphthylamino oder Morpholino ist.

j) worin Y ein Rest der Formel

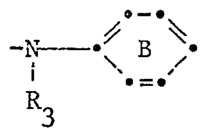

(4),

und $R_3$ Wasserstoff oder $C_{1-4}$-Alkyl, das durch Halogen, Cyan, Hydroxy, Carboxy, Sulfo oder Sulfato substituiert sein kann, ist, und der Phenylring B durch Methyl, Methoxy, Aethoxy, Chlor, Hydroxy, Ureido, Acetylamino, Carboxy oder Sulfo substituiert sein kann.

k) worin $R_3$ Wasserstoff ist, und der Benzolring B durch Sulfo oder Methyl substituiert sein kann;

l) worin Y 2-Methyl-5-sulfophenylamino oder 2,5-Disulfophenylamino ist.

Durch Kombination obiger Merkmale, z.B. g) und l) oder c), h) und k), ergeben sich weitere bevorzugte Untergruppen von Reaktivfarbstoffen der Formel (1).

Besonders bevorzugt ist

m) der Reaktivfarbstoff der Formel

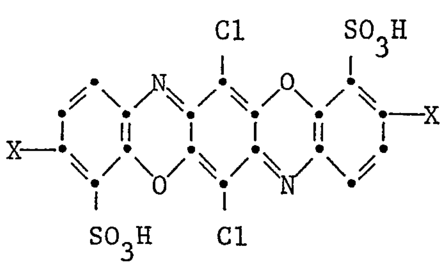

(3),

worin X ein Rest der Formel

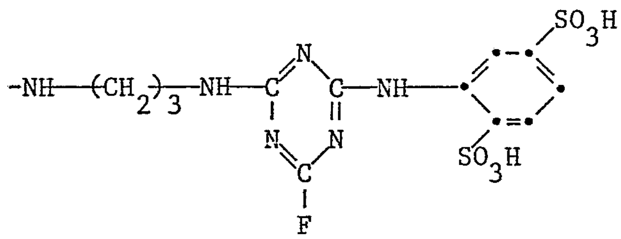

(5)

ist.

Die Farbstoffe der Formel (1) sind faserreaktiv, da sie mindestens ein abspaltbares Fluoratom am s-Triazinring enthalten.
Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (1) ist dadurch gekennzeichnet, dass man in beliebiger Reihenfolge Dioxazinverbindungen der Formel

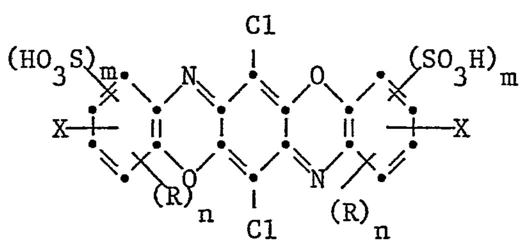

(1),

worin R, n und m die unter Formel (1) angegebenen Bedeutungen haben, und X ein Rest der Formel

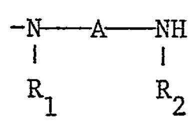

(6)

ist, 2,4,6-Trifluor-s-triazin und gegebenenfalls Amine der Formel

H—Y (7)

kondensiert.

Bei dem im vorangehenden beschriebenen Verfahren können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Wichtige Verfahrensvarianten sind dadurch gekennzeichnet, dass man:

1. eine Dioxazinverbindung der Formel (1), worin X ein Rest der Formel (6) ist, mit 2,4,6-Trifluor-s-triazin kondensiert und das erhaltene di-primäre Kondensationsprodukt mit 2 Mol eines Amins der Formel (7) kondensiert.

2. 2,4,6-Trifluor-s-triazin mit einem Amin der Formel (7) monokondensiert, und die erhaltene Zwischenverbindung im molaren Verhältnis 2:1 mit einer Dioxazinverbindung der Formel (1), worin X ein Rest der Formel (6) ist, kondensiert.

   Falls im Endfarbstoff der Formel (1) Y ein Fluoratom ist, entfällt die Kondensation mit einem Amin der Formel (7).

Die bevorzugte Herstellungsweise des Reaktivfarbstoffes gemäss m) ist dadurch gekennzeichnet, dass man eine Dioxazinverbindung der Formel

BAD ORIGINAL

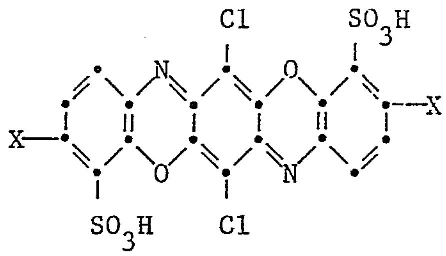

(3),

worin X ein Rest der Formel

$-NH-(CH_2)_3-NH_2$ (8)

ist, mit der durch Monokondensation von 2,4,6-Trifluor-s-triazin und Anilin-2,5-disulfonsäure erhaltenen Verbindung der Formel

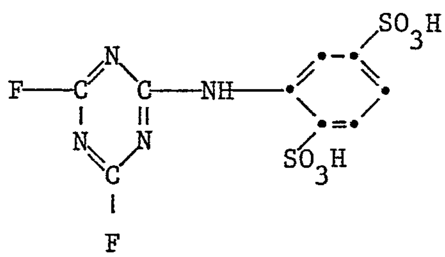

(9)

kondensiert.

Die Kondensation des 2,4,6-Trifluor-s-triazins mit den Dioxazinverbindungen der Formel (1) erfolgen vorzugsweise in wässriger Lösung oder Suspensionen, bei niedrigen Temperaturen, vorzugsweise zwischen 0° und 5° C und bei schwach saurem, neutralem bis schwach alkalischem pH-Wert. Vorteilhaft wird der bei der Kondensation freiwerdende Fluorwasserstoff laufend durch Zugabe wässriger Alkalihydroxide, -carbonate oder -bicarbonate neutralisiert. Für die weitere Umsetzung der so erhaltenen Fluortriazinfarbstoffe bzw. für die Umsetzung des 2,4,6-Trifluor-s-triazins mit den Aminen der Formel (7) setzt man die freien Amine oder deren Salze, bevorzugt in Form des Hydrochlorids, ein. Die Umsetzung wird bei Temperaturen etwa zwischen 0 und 40° C, bevorzugt zwischen 5 und 25° C, unter Zusatz säurebindender Mittel, bevorzugt Natriumcarbonat, in einem pH-Bereich von 2 bis 8, bevorzugt 5 bis 6,5, durchgeführt.

Die Kondensation des Fluortriazins mit einem Amin der Formel (7) kann vor oder nach der Kondensation des Fluortriazins mit einem Dioxazin der Formel (1) geschehen. Die Kondensation des Fluortriazins mit einem Amin der Formel (7) erfolgt vorzugsweise in wässriger Lösung oder Suspension, bei niedriger Temperatur und bei schwach saurem bis neutralem pH-Wert. Auch hier wird der bei der Kondensation freiwerdende Fluorwasserstoff vorteilhafterweise durch laufende Zugabe von wässrigen Alkalihydroxiden, -carbonaten oder -bicarbonaten neutralisiert.

Als Ausgangsverbindungen zur Herstellung der Reaktivfarbstoffe der Formel (1) sind zu nennen:

a) Dioxazinverbindungen der Formel (1), worin X ein Rest der Formel (6) ist:

Die Amino-6,13-dichlorotriphendioxazine können nach bekannten Methoden durch Kondensation von 2,3,5,6-Tetrachloro-1,4-benzochinon mit aromatischen Aminkomponenten gewonnen werden.

Im vorliegenden Falle geht man so vor, dass man 1 Mol 2,3,5,6-Tetrachloro-1,4-benzochinon mit 2 Mol eines Diamins der Formel

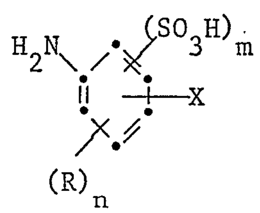

(10)

worin X ein Rest der Formel (6) ist, kondensiert, und das resultierende Dianilid in Gegenwart eines Oxydationsmittels, wie z.B. Oleum, zur Bewirkung des Ringschlusses erhitzt. Weitere Gruppen $SO_3H$ können während dieser Ringschlussstufe eingeführt werden.

Beispiele für Diamine der Formel (10) sind die folgenden:
4-(3'-Amino-2'-hydroxypropylamino)-anilin-3-sulfonsäure.
4-(2'-Aminopropylamino)-anilin-3-sulfonsäure,

4-(3'-Aminopropylamino)-anilin-3-sulfonsäure,
4-(2'-(4"-Sulfophenyl)-3'-aminopropylamino)-anilin-3-sulfonsäure,
4-(2'-(3"-Sulfophenyl)-3'-aminopropylamino)-anilin-3-sulfonsäure,
4-(2'-Phenyl-3'-aminopropylamino)-anilin-3-sulfonsäure,
4-(4'-Aminocyclohexylamino)-anilin-3-sulfonsäure,
4-(3'-Aminocyclohexylamino)-anilin-3-sulfonsäure,
4-Piperazino-anilin-3-sulfonsäure.

b) 2,4,6-Trifluor-s-triazin (Cyanurfluorid).

c) Amine der Formel (7):
Ammoniak, Methylamin, Dimethylamin, Aethylamin, Diäthylamin, Propylamin, Isopropylamin, Butylamin, Dibutylamin, Isobutylamin, sek.-Butylamin, tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, Aminoäthansulfonsäure, β-Sulfatoäthylamin, Benzylamin, Phenäthylamin, Cyclohexylamin, N-Methylaminobenzol, N-Aethylaminobenzol, N-Propylaminobenzol, N-Butylaminobenzol, N-Hexylaminobenzol, N-β-Hydroxyäthylaminobenzol, N-β-Chloräthylaminobenzol, N-β-Cyanäthylaminobenzol, N-β-Sulfoäthylaminobenzol, 1-(N-Aethylamino)-2-, -3- oder -4-methylbenzol, 1-(N-Aethylamino)-2-, -3- oder -4-äthylbenzol, 1-(N-Aethylamino)-2-, -3- oder -4-chlorbenzol, 1-N-Aethylaminobenzol-3- oder -4-sulfonsäure, 1-(N-Aethylamino)-4-butylbenzol, 1-(N-Aethylamino)-4-hexylbenzol, 1-(N-Aethylamino)-4-octylbenzol, 1-(N-Aethylamino)-4-vinylbenzol, 1-N-n-Butylamino-3-methylbenzol, N-Isopropylaminobenzol, N-Isobutylaminobenzol, N-sek.-Butylaminobenzol, 1-(N-Aethylamino)-4-fluorbenzol, Benzylamin, Cyclohexylamin, Anilin, o-, m- und p- Toluidin, 2,3-, 2,4-, 2,5-, 2,6-, 3,4- und 3,5-Dimethylanilin, o-, m- und p-Chloranilin, N-Methylanilin, N-Aethylanilin, o-, m- und p-Aminophenol, 2-Methyl-4-nitroanilin, 2-Methyl-5-nitroanilin, 2,5-Dimethoxyanilin, 3-Methyl-4-nitroanilin, 2-Nitro-

BAD ORIGINAL

4-methylanilin, 3-Nitro-4-methylanilin, o-, m- und p- Anisidin, o-, m- und p-Phenetidin, 2-Methoxy-5-methylanilin, 2-Aethoxy-5-methoxyanilin, 4-Bromanilin, 3-Aminobenzamid, 4-Aminophenylsulfamid, 3-Trifluormethylanilin, 3- und 4-Aminophenylsulfamid, 3-Trifluormethylanilin, 3- und 4-Aminophenylharnstoff, 1-Naphthylamin, 2-Naphthylamin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methansulfonsäure, 2-Aminotoluol-4-sulfonsäure, 2-Aminotoluol-5-sulfonsäure, p-Aminosalicylsäure, 1-Amino-4-carboxy-benzol-3-sulfonsäure, 1-Amino-2-carboxy-benzol-5-sulfonsäure, 1-Amino-5-carboxy-benzol-2-sulfonsäure, 1-Naphthylamin-2-, -3-, -4-, -5-, -6-, -7- und -8-sulfonsäure, 2-Naphthylamino-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin und Piperazin.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

BAD ORIGINAL

Die Reaktivfarbstoffe der Formel (1) sind neu. Sie zeichnen sich durch hohe Reaktivität aus, und sie ergeben Färbungen mit guten Nass- und Lichtechtheiten. Besonders hervorzuheben ist es, dass die Farbstoffe eine gute Löslichkeit und hohe Farbstoff-Fixierung aufweisen.

Die Reaktivfarbstoffe der Formel (1) eignen sich zum Färben und Bedrucken der verschiedensten Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Sie eignen sich vor allem zum Druck, insbesondere auf Baumwolle, ebenso aber auch zum Bedrucken von stickstoffhaltigen Fasern, z.B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

In den nachfolgenden Beispielen bedeuten die Teile Gewichtsteile, die Prozente Gewichtsprozente und die Temperaturen sind in Celsiusgraden angegeben.

BAD ORIGINAL

Beispiel 1: Herstellung von 4-(3'-Amino-propylamino)-anilin-3-sulfonsäure.

Zu einer Aufschlämmung von 259,5 Teilen 2-Chlor-5-nitro-benzol-sulfonsaurem Natrium in 400 Teilen Wasser werden 222 Teile 1,3-Diaminopropan zugetropft. Man erwärmt auf 90° C und kocht während 1 Stunde am Rückfluss. Hierauf verdünnt man das Reaktionsgemisch mit 1000 Teilen Wasser, stellt die klare Lösung mit ca. 400 Teilen 10-n Salzsäure auf pH 7, lässt erkalten und filtriert die ausgefallene N-(3'-Amino-propyl)-4-nitro-anilin-2-sulfonsäure.

Die so erhaltene Nitroverbindung wird hierauf nach Béchamp reduziert, indem man das Produkt in Portionen in eine kochende Mischung von 2000 Teilen Wasser, 250 Teilen Eisenpulver und 20 Teilen Eisessig einträgt. Nach beendeter Reduktion wird das Reaktionsgemisch mit ca. 160 Teilen 10-n Natriumhydroxydlösung mimosaalkalisch gestellt und heiss vom Eisenschlamm abfiltriert. Das Filtrat wird mit etwas Hydrosulfit entfärbt und mit ca. 110 Teilen 10-n Salzsäure auf pH 7 gestellt.

Zur Vervollständigung der Abscheidung werden noch ca. 10 Vol.% Kochsalz zugegeben. Man lässt erkalten und filtriert die gebildete 4-(3'-Aminopropylamino)-anilin-3-sulfonsäure.

Anilkondensation

245 Teile 4-(3'-Amino-propylamino)-anilin-3-sulfonsäure und 123 Teile Chloranil werden in 1500 Teilen Wasser aufgeschlämmt und auf 55° C erwärmt. Durch Zutropfen von ca. 500 Teilen 2-n Natriumhydroxydlösung wird das pH während der Kondensation bei 6 gehalten. Nach ca. 12 Stunden lässt man erkalten und filtriert das dunkelbraune Reaktionsprodukt. Nach dem Waschen mit Wasser wird das so erhaltene Anil im Vakuum bei 100° C getrocknet.

BAD ORIGINAL

Ringschluss

80 Teile des so erhaltenen Anils werden im Laufe von ca. 40 Minuten in 1600 Teile Oleum 24 % eingetragen. Die Temperatur steigt auf ca. 40° C und es entsteht eine olivebraune Lösung. Man erwärmt das Reaktionsgemisch innert ca. 15 Minuten auf 65° C und hält diese Temperatur während ca. 1 Stunde. Dabei entsteht eine tiefblaue Lösung. Man kühlt auf Zimmertemperatur und trägt die Oleumlösung unter Rühren auf 4000 Teile Eis aus. Unter Eiskühlung werden hierauf innert ca. 1 Stunde 2500 Teile 10-n Natriumhydroxydlösung zugetropft, worauf das Dioxazin in einer gut filtrierbaren Form praktisch vollständig ausfällt. Man filtriert und wäscht mit Wasser.

Reaktivfarbstoff

Das so erhaltene Dioxazin-Chromophor wird über Nacht in 1000 Teilen Wasser angerührt und anderntags mit Natriumhydroxydlösung auf pH 7 gestellt.

Gleichzeitig werden 60,72 Teile Anilin-2,5-disulfonsäure in 800 Teilen Wasser mit ca. 20 Teilen 10-n Natriumhydroxydlösung neutral gelöst und auf 0° C abgekühlt. Im Laufe von 20 Minuten werden 34 Teile Cyanurfluorid zugetropft und durch gleichzeitige Zugabe von ca. 33 Teilen 10-n Natriumhydroxydlösung wird das pH zwischen 4 und 5 gehalten.

Die so erhaltene klare Lösung des primären Kondensationsproduktes giesst man hierauf zur vorbereiteten Aufschlämmung des Dioxazinchromophors, erwärmt langsam auf 30 bis 35° C und hält das pH des Reaktionsgemisches durch Zutropfen von Natronlauge zwischen 7 und 8, wozu ca. 31 Teile 10-n Natriumhydroxydlösung benötigt werden.

Nach ca. 3 Stunden entsteht eine klare Lösung, aus welcher der fertige Farbstoff mit 300 Teilen Kochsalz (= 10 Vol.%) isoliert wird.

BAD ORIGINAL

Nach der Filtration wird die Farbstoffpaste mit einer gesättigten Lösung von Dinatriumhydrogenphosphat gepuffert und im Vakuum bei 50° C getrocknet.

Der so erhaltene Farbstoff färbt Baumwolle in reinen blauen Tönen.

Verwendet man anstelle von Anilin-2,5-disulfonsäure eine äquivalente Menge der 2-Methyl-anilin-5-sulfonsäure, so erhält man einen ähnlichen Farbstoff.

Aehnliche Farbstoffe werden erhalten, wenn anstelle von Anilin-2,5-disulfonsäure äquivalente Mengen der unten aufgeführten Amine verwendet werden.

| Beispiel | Amine |
|---|---|
| 2 | Ammoniak |
| 3 | Methylamin |
| 4 | Aethanolamin |
| 5 | Diäthanolamin |
| 6 | Taurin |
| 7 | n-Butylamin |
| 8 | Anilin |
| 9 | N-Methylanilin |
| 10 | N-Aethylanilin |
| 11 | m-Toluidin |
| 12 | p-Toluidin |
| 13 | m-Chloranilin |
| 14 | p-Chloranilin |
| 15 | o-Anisidin |
| 16 | p-Anisidin |
| 17 | p-Phenetidin |
| 18 | p-Aminobenzoesäure |
| 19 | Anilin-3-sulfonsäure |
| 20 | 4-Aminoacetanilid |
| 21 | 3-Aminophenylharnstoff |
| 22 | 4-Aminophenylharnstoff |
| 23 | Diäthylamin |
| 24 | Morpholin |
| 25 | 2-Naphthylamin-6-sulfonsäure |
| 26 | 4-Aminosalicylsäure |
| 27 | Anilin-2,4-disulfonsäure |

BAD ORIGINAL

Beispiel 28: Ersetzt man in Beispiel 1 die 2-Chlor-5-nitro-benzol-sulfonsäure durch eine entsprechende Menge 2,3-Dichlor-5-nitro-benzol-sulfonsäure und verfährt im übrigen nach den Angaben von Beispiel 1, so erhält man einen Farbstoff der mutmasslichen Formel

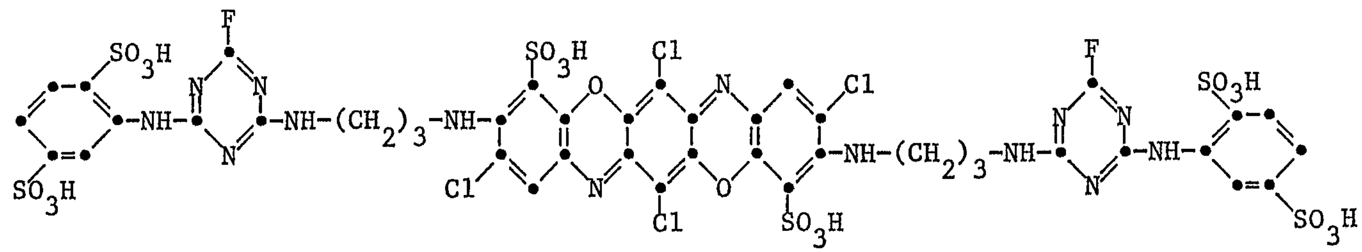

der Baumwolle in rotstichig blauen Tönen färbt.

Beispiel 29: Ersetzt man in Beispiel 1 das 1,3-Diamino-propan durch eine äquivalente Menge 1,4-Diaminocyclohexan und verfährt im übrigen nach den Angaben von Beispiel 1, so erhält man einen Farbstoff der mutmasslichen Formel

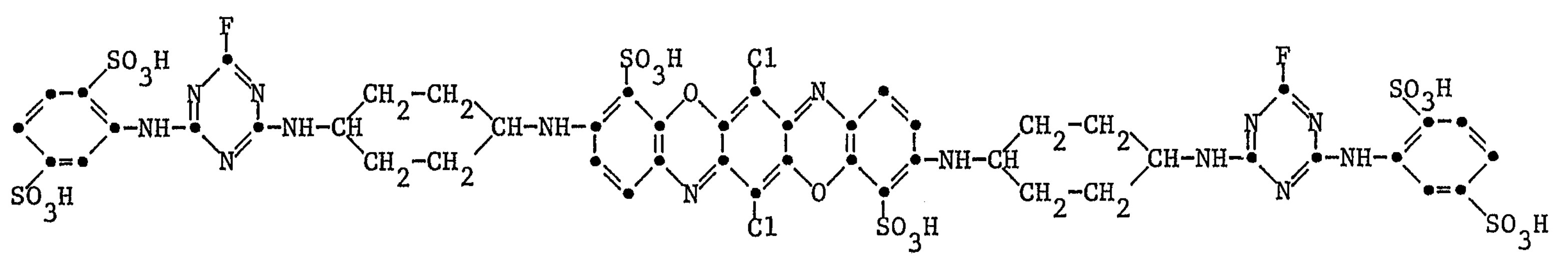

der Baumwolle in blauen Tönen färbt.

Beispiel 30:

Ersetzt man in Beispiel 1 das 1,3-Diamino-propan durch eine äquivalente Menge Piperazin und verfährt im übrigen nach den Angaben von Beispiel 1, so erhält man einen Farbstoff der mutmasslichen Formel

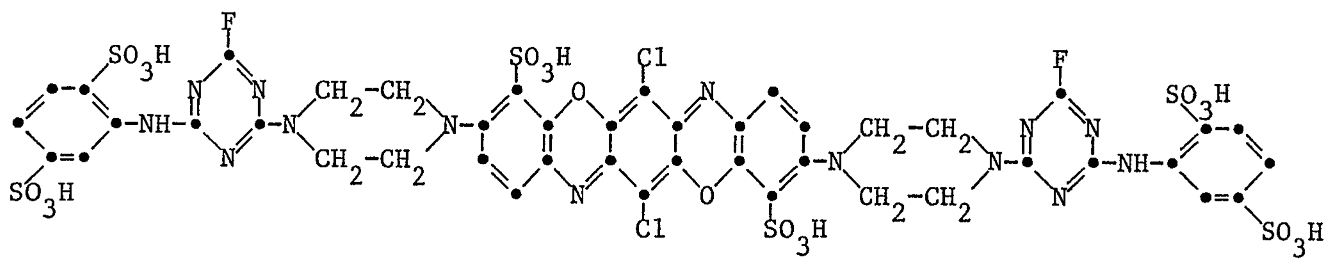

Färbevorschrift 1

2 Teile des gemäss Beispiel 1 erhaltenen Farbstoffes werden unter Zusatz von 5 bis 20 Teilen Harnstoff und 2 Teilen kalzinierter Soda in 100 Teilen Wasser bei 20 bis 50° C gelöst. Mit der erhaltenen Lösung wird ein Baumwollgewebe imprägniert, sodass es um 60 bis 80 % seines Gewichtes zunimmt, und dann getrocknet. Danach wird während 1/2 bis 5 Minuten bei 140 bis 210° thermofixiert, dann während einer Viertelstunde in einer 0,1 %igen kochenden Lösung eines ionenfreien Waschmittels geseift, gespült und getrocknet.

Färbevorschrift 2

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, sodass es um 75 % seines Gewichtes zunimmt, und dann getrocknet.

Danach imprägniert man das Gewebe mit einer 20° warmen Lösung, die pro Liter 5 Gramm Natriumhydroxyd und 300 Gramm Natriumchlorid enthält, quetscht auf 75 % Gewichtszunahme ab, dämpft die Färbung während 30 Sekunden bei 100 bis 101°, spült, seift während einer Viertelstunde in einer 0,3 %igen kochenden Lösung eines ionenfreien Waschmittels, spült und trocknet.

Färbevorschrift 3

2 Teile des gemäss Beispiel 1 erhältlichen Farbstoffes werden in 100 Teilen Wasser gelöst.

Die Lösung gibt man zu 1900 Teilen kaltem Wasser, fügt 60 Teile Natriumchlorid zu und geht mit 100 Teilen eines Baumwollgewebes in dieses Färbebad ein.

BAD ORIGINAL

Man steigert die Temperatur auf 60° , wobei nach 30 Minuten 40 Teile kalzinierte Soda und nochmals 60 Teile Natriumchlorid zugegeben werden. Man hält die Temperatur 30 Minuten auf 60°, spült und seift dann die Färbung während 15 Minuten in einer 0,3 %igen kochenden Lösung eines ionenfreien Waschmittels, spült und trocknet.

Färbevorschrift 4

4 Teile des in Beispiel 1 hergestellten Reaktivfarbstoffes werden in 50 Teilen Wasser gelöst. Dazu gibt man 50 Teile einer Lösung, die pro Liter 5 g Natriumhydroxyd und 10 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 bis 12 Stunden bei Raumtemperatur gelagert. Danach wird die gefärbte Ware gespült, während einer Viertelstunde mit einem nichtionogenen Waschmittel kochend geseift, nochmals gespült und getrocknet. Man erhält eine blaue Färbung mit guten Echtheitseigenschaften.

BAD ORIGINAL

Patentansprüche

1. Reaktivfarbstoffe der Formel

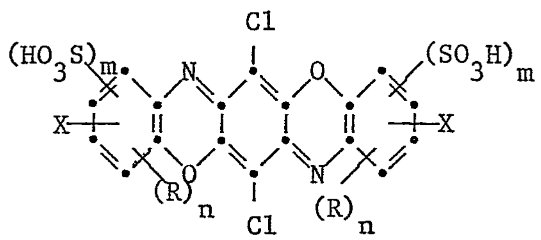

(1),

worin $(R)_n$ für n Substituenten R steht, die unabhängig voneinander $C_{1-4}$-Alkyl, $C_{1-4}$-Alkoxy, Carboxy oder Halogen sein können, n = 0 bis 3, m = 1 bis 2, und X ein Rest der Formel

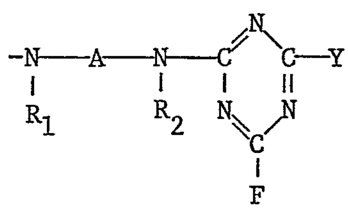

(2) ,

worin $R_1$ und $R_2$ unabhängig voneinander Wasserstoff oder gegebenenfalls substituiertes $C_{1-4}$-Alkyl, A $C_{3-7}$-Alkylen, das durch Halogen, Hydroxy, Carboxy, Sulfo, Phenyl, Sulfophenyl oder $C_{1-4}$-Alkoxycarbonyl substituiert sein kann, oder Cyclohexylen, das durch $C_{1-4}$-Alkyl substituiert sein kann, oder worin die Gruppe $-N(R_1)-A-N(R_2)-$ 1,4-Piperazindiyl ist, und Y Fluor, $-NH_2$ oder eine substituierte Aminogruppe ist.

2. Reaktivfarbstoffe gemäss Anspruch 1, worin n = 0 ist.

3. Reaktivfarbstoffe gemäss Anspruch 1 oder 2, worin m = 1 ist.

4. Reaktivfarbstoffe gemäss den Ansprüchen 1, 2 und 3, der Formel

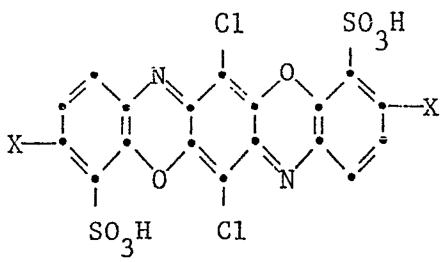

(3),

worin X die im Anspruch 1 angegebene Bedeutung hat.

5. Reaktivfarbstoffe gemäss einem der Ansprüche 1 bis 4, worin $R_1$ und $R_2$ Wasserstoff sind.

6. Reaktivfarbstoffe gemäss einem der Ansprüche 1 bis 5, worin A Propylen ist, das durch Chlor, Hydroxy, Methyl oder Phenyl substituiert sein kann.

7. Reaktivfarbstoffe gemäss Anspruch 6, worin A 1,2-Propylen, 1,3-Propylen, 2-Hydroxy-1,3-propylen, 1-Phenyl-1,3-propylen, 2-Phenyl-1,3-propylen, 2-(4'-Sulfophenyl)-1,3-propylen, 2-Methyl-1,3-propylen oder 2,2-Dimethyl-1,3-propylen ist.

8. Reaktivfarbstoffe gemäss Anspruch 7, worin A 1,2-Propylen, 1,3-Propylen, 2-Methyl-1,3-propylen oder 2,2-Dimethyl-1,3-propylen ist.

9. Reaktivfarbstoffe gemäss Anspruch 8, worin A 1,3-Propylen ist.

10. Reaktivfarbstoffe gemäss einem der Ansprüche 1 bis 9, worin Y $-NH_2$, $C_{1-4}$-Alkylamino, das durch Hydroxy oder Sulfo substituiert sein kann, N,N-Di-$C_{1-4}$-alkylamino, das durch Hydroxy substituiert sein kann, Phenylamino, das durch $C_{1-4}$-Alkyl, $C_{1-4}$-Alkoxy, Halogen, Hydroxy, Ureido, Acetylamino, Carboxy, Sulfo oder Sulfomethyl substituiert sein kann, N-$C_{1-4}$-Alkyl-N-phenylamino, Sulfonaphthylamino oder Morpholino ist.

11. Reaktivfarbstoffe gemäss Anspruch 10, worin Y ein Rest der Formel

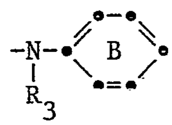

(4)

und $R_3$ Wasserstoff oder $C_{1-4}$-Alkyl, das durch Halogen, Cyan Hydroxy, Carboxy, Sulfo oder Sulfato substituiert sein kann, ist, und der Phenyl ring B durch Methyl, Methoxy, Aethoxy, Chlor, Hydroxy, Ureido, Acetylamino, Carboxy oder Sulfo substituiert sein kann.

12. Reaktivfarbstoffe gemäss Anspruch 11, worin $R_3$ Wasserstoff ist, und der Benzolring B durch Sulfo oder Methyl substituiert sein kann.

13. Reaktivfarbstoffe gemäss Anspruch 12, worin Y 2-Methyl-5-sulfophenylamino oder 2,5-Disulfophenylamino ist.

14. Reaktivfarbstoff gemäss Anspruch 13, der Formel

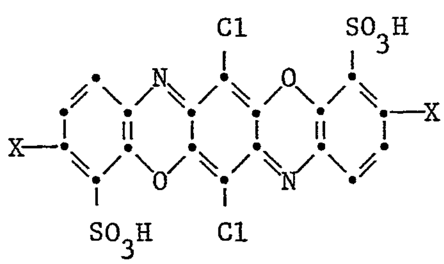

(3) ,

worin X ein Rest der Formel

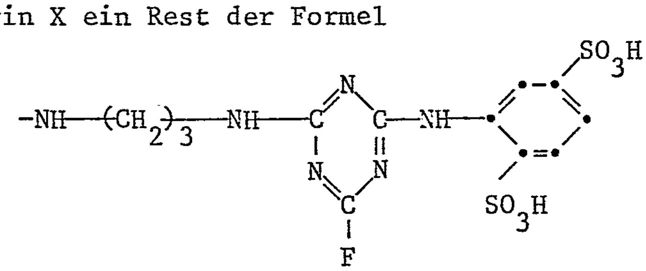

(5)

ist.

15. Verfahren zur Herstellung von Reaktivfarbstoffen gemäss Anspruch 1, dadurch gekennzeichnet, dass man in beliebiger Reihenfolge Dioxazinverbindungen der Formel

BAD ORIGINAL

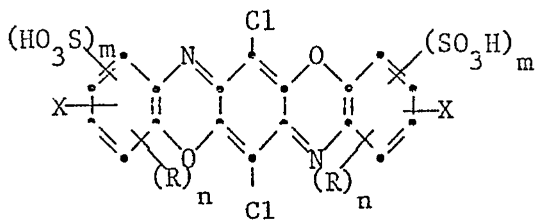

(1),

worin R, n und m die in Anspruch 1 angegebenen Bedeutungen haben, und X ein Rest der Formel

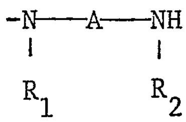

(6)

ist, 2,4,6-Trifluor-s-triazin und gegebenenfalls Amine der Formel

H—Y (7)

kondensiert.

16. Verfahren gemäss Anspruch 15, zur Herstellung des Reaktivfarbstoffes gemäss Anspruch 14, dadurch gekennzeichnet, dass man eine Dioxazinverbindung der Formel

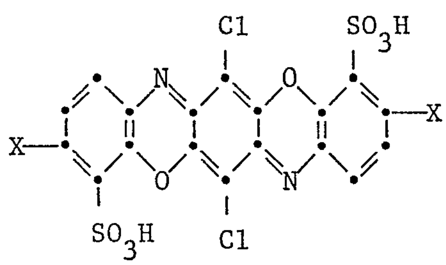

(3),

worin X ein Rest der Formel

$-NH-(CH_2)_3-NH_2$ (8)

ist, mit der durch Monokondensation von 2,4,6-Trifluor-s-triazin und Anilin-2,5-disulfonsäure erhaltenen Verbindung der Formel

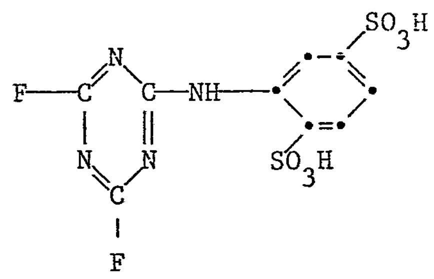

(9)

kondensiert.

17. Verwendung der Reaktivfarbstoffe gemäss den Ansprüchen 1 bis 14, bzw. der gemäss den Ansprüchen 15 und 16 erhältlichen Reaktivfarbstoffen zum Färben und Bedrucken.

18. Verwendung gemäss Anspruch 17, zum Färben von Cellulosefasern.